# EUROPEAN PATENT SPECIFICATION

(11) **EP 2 302 849 B1**
(45) Date of publication and mention of the grant of the patent: **25.03.2020**
(21) Application number: 10179063.2
(22) Date of filing: 23.09.2010
(51) Int. Cl.: H04L 12/751, H04L 12/66, H04L 29/06, H04L 29/12

(54) **Module communication**
Modulkommunikation
Communication de module

(30) Priority: 25.09.2009 GB 0916869
(43) Date of publication of application: 30.03.2011
(73) Proprietor: GE Aviation Systems Limited, Bishops Cleeve Cheltenham Gloucestershire GL52 8SF (GB)
(72) Inventor: Dunsdon, Jonathan Mark, Evesham, Warwickshire WR11 3DW (GB); Sykes, Benjamin James, Cheltenham, Gloucestershire GL52 2QF (GB)
(74) Representative: Openshaw & Co.

(56) References cited:
- US-A1- 2006 190 458
- US-A1- 2009 161 578
- Andrew S. Tanenbaum: "Computer Network" In: "Computer Network", 1 January 2003 (2003-01-01), Prentice Hall, XP055104289, ISBN: 978-0-13-038488-1 pages 356-369, * page 356 - page 369 *

## Description

The present invention relates to module communication, such as communication between modules in a network.

Many systems have a network for modules within the system to be able to communicate with each other. For example an aircraft, a ship, a piece of machinery such as a turbine, a factory and a hospital have modules that need to communicate with each other. In an aircraft for example there are various modules such as an engine controller, an engine monitoring unit, an aircraft monitoring unit and a ground station that need to communicate with each other.

Conventionally a central locator may be used which is connected to each of the modules to handle communications between them. However, as all of the modules are connected via the central locator, this provides a single point of failure which is not suitable for important or critical systems. Alternatively, modules may be connected together in a distributed network with each module having a list or table indicating the route to be taken within the network to communicate with another particular module. However, when a module is removed or a new module is added, the list or table for every module in the network needs to be manually updated which is a time consuming exercise, resulting in long and frequent downtimes for the system which is generally inconvenient.

"Computer Network" by Andrew Tanenbaum in the periodical "Computer Network" (Prentice Hall), XP055104289, on 2003-01-01, discloses a network comprising a dynamic routing scheme for communication between different routers of the network.

Document US2006190458 discloses a plurality of communication gateways, each communication gateway being connectable to at least one other of the communication gateways; a plurality of modules, wherein each module is a monitoring unit operable to obtain data for a component, each record in the sensor node ID table has three constituent elements, that is, a sensor node global ID, a sensor node local ID and a gateway intermediate service ID.

It is desirable to overcome or alleviate at least some of the problems associated with communication between the modules discussed above.

According to a first aspect of the present invention, there is provided a communication network for communicating between a plurality of modules, the communication network being in accordance with claim 1 herein.

The dynamic module naming list of each communication gateway is automatically updated as to the status of modules in the network, such as by the addition or removal of a module and so does not require time consuming manual updating.

When a module is added to the network, it is arranged to register with a communication gateway so that the dynamic module naming list for that gateway is then updated. The registration of the added module to this gateway is sent to all directly connected gateways and cascaded to all other gateways in the network so that the dynamic module naming list of each communication gateway in the network includes the added module. The dynamic module naming list for each gateway in the network preferably holds at least one route to every module in the network.

When a module shuts down, it is arranged to send a de-register message to alert gateways in the network that it is no longer available. If a link between gateways is lost or closed, any routes in dynamic module naming lists including that link are removed. Conversely, if a link between gateways is added, route updates are announced.

As each communication gateway has a dynamic module naming list which is automatically updated by the addition or removal of a module and as this update is sent to all directly connected gateways and cascaded to all other gateways in the network, a comprehensive current dynamic module naming list is available to all modules. Reliable communications are thus achieved without having to manually input updated data to each communication gateway in the network and without having to rely on a single central locator which results in a single point of failure.

Also disclosed herein is a communication gateway for a network. The communication gateway includes a dynamic module naming list to enable the communication gateway to direct a message to an appropriate recipient module via directly connected gateways within the network.

According to another aspect of the present invention there is provided a method of communicating in a communication network between a plurality of modules associated with an aircraft, in accordance with claim 5 herein.

Examples of the present invention will now be described with reference to the accompanying drawings, in which:
Figure 1 illustrates a first example of a communication network for communication between a plurality of modules;
Figure 2 illustrates a second example of a communication network for communication between a plurality of modules; and
Figure 3 is a flow diagram illustrating how dynamic module naming lists are updated when a module is added to the network.

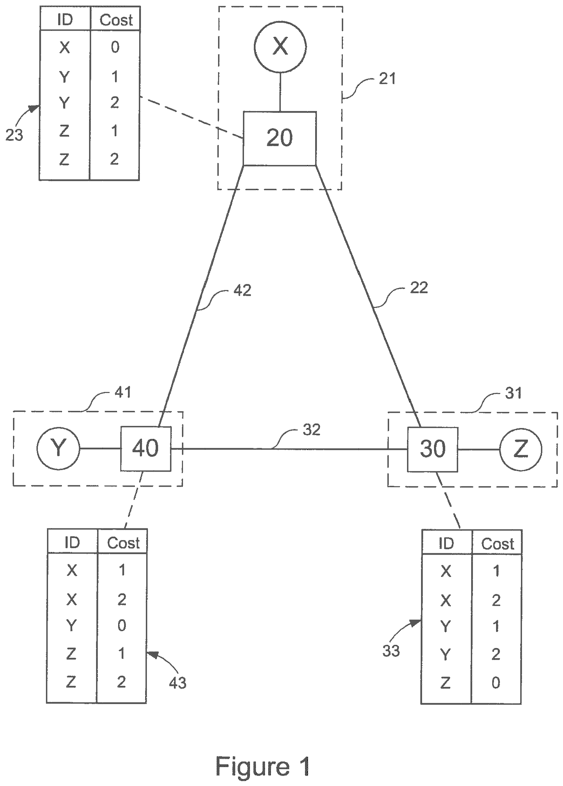

Figure 1 illustrates a network 10 for communicating between modules X, Y and Z. The modules may take the form of any device which needs to communicate with another device. For example, in an aircraft an engine controller, an engine monitoring unit, an aircraft monitoring unit and a ground station may need to communicate with each other and in a turbine a turbine controller may need to communicate with a power controller and a safety controller for example. In the example of Figure 1, each unit X, Y and Z is connected to a corresponding communication gateway 20, 30, 40. The module X, Y, Z and its corresponding respective gateway, 20, 30, 40 form a unit 21, 31, 41 shown in dashed lines in Figure 1. Each communication gateway 20, 30, 40 is connected 22, 32, 42 to at least one other communications gateway. The connection may take any form and may be by a physical link such as a wire or an optical fibre or via a radio signal for example. Each gateway 20, 30, 40 has a dynamic module naming list 23, 33, 43 to enable it to direct a message to an appropriate recipient module X, Y, Z via directly connected communication gateways within the network. For example, dynamic module naming list 23 for communication gateway 20 includes a left hand column indicating the modules registered in the network and the right hand column indicates the cost or number of other communication gateways that need to be passed through to reach the recipient module. Each communication gateway 20, 30, 40 has an appropriate dynamic module naming list which is automatically updated as to the operational or active modules currently in the network. Each dynamic module naming list is preferably updated and maintained by the addition or removal of a module to or from the network 10 requiring automatic registration or de-registration with its corresponding communication gateway which is cascaded to all other communication gateways in the network 10.

Communication gateways 20, 30, 40 are preferably implemented by a software application but may take any form such as a hard wired logic circuit. The communication gateways 20, 30, 40 connect to other communication gateways and act as message handlers. Modules X, Y, Z only connect to their local gateway. More than one module may be connected to a single communication gateway as illustrated in the next example. Communication gateways allow modules to reside on different physical devices without needing to know the exact location of other modules or the networking topology. By using dynamic registration, modules can be started on any device and moved from one device to another while the system is running without needing to re-configure any modules.

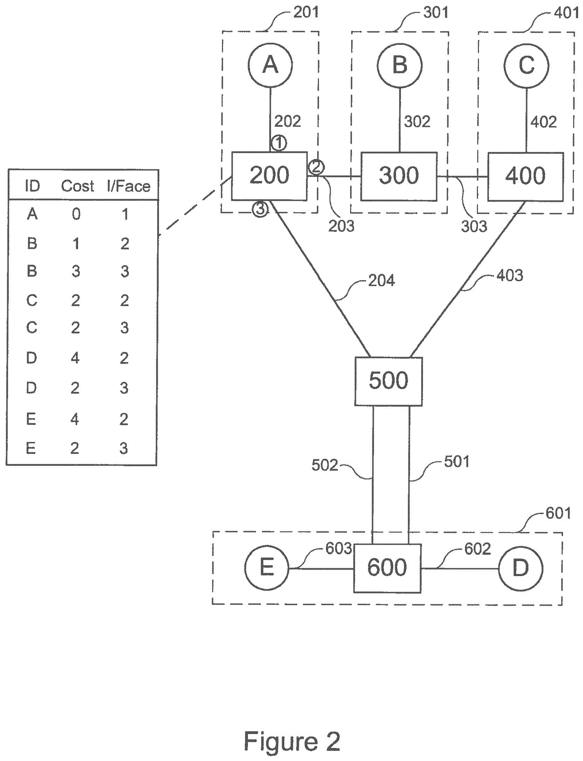

Figure 2 shows a more detailed example of a communication network of an example of the present invention. In this example there are five modules A, B, C, D and E. The modules may be part of the systems of an aircraft for example and module A may be an engine controller which may obtain data about the engine, such as the speed of the shaft, the temperature of the engine at various points and the vibration at various points or of various components. Module B may for example be an engine monitoring unit which may process raw data into averages. Module C may be an aircraft monitoring unit which may for example check average values for various situations such as for take-off, cruising and landing situations. Modules D and E may be based in a ground station and may be arranged to analyse and store data for example to determine long term trends in the aircraft such as for determining maintenance schedules.

As can be seen from Figure 2, each module A, B, C, D, E is connected to an associated communication gateway 200, 300, 400, 500, 600. In this example communication gateway 500 does not have an associated module and has two connections to neighbouring communication gateway 600 at a ground station 601. The first connection 501 may for example be for radio communications whilst the aircraft is in the air and the second connection 502 may be a physical connection for when the aircraft has landed.

Whilst each communication gateway 200, 300, 400, 500, 600 will have its own dynamic module naming list, only the dynamic module naming list 204 for communication gateway 200 is shown in this example. As can be seen, the left hand column of the list indicates each of the current modules A, B, C, D, E currently registered in the network 100 that can be communicated with. The next column indicates the cost or number of communication gateways that have to be passed through for a communication to reach its destination and the third column indicates the interface or socket on the communication gateway that connects with that particular selected route for the desired module. Each interface connects to either a module or a communication gateway. In the example of Figure 2, communication gateway 200 has three interfaces. Interface 1 connects to module A, interface 2 connects with communication gateway 300 and interface 3 connects with communication gateway 500. As explained earlier, the dynamic module naming list for each communication gateway provides a route table of ways to forward messages to every other module currently registered in the network. Each of the other communication gateways 300, 400, 500, 600 will have its own corresponding dynamic module naming list (not shown).

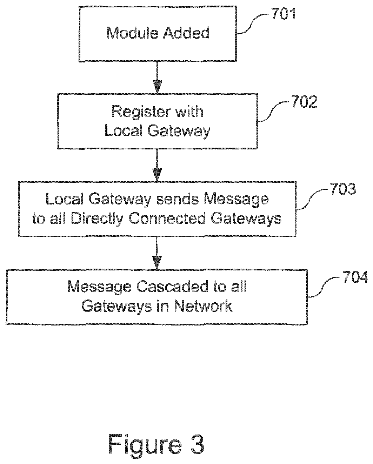

As illustrated in the flow diagram of Figure 3, when a module is added to the network at step 701, the module registers with a local gateway at step 702. The communication gateway then sends the registration of the new module to all directly connected communication gateways at step 703 and at step 704 a message advising all other gateways to update their dynamic module naming lists is cascaded at step 704 until all communication gateways in the network have updated dynamic module naming lists. Conversely, when a module shuts-down a de-register message is passed to its local gateway which is forwarded on to directly connected gateways and cascaded to all gateways in the network to alert all dynamic module naming lists in communication gateways of the network that it is no longer available. If a link is lost or closed or a new link is added, any routes using that link are removed or added appropriately and route updates are cascaded to dynamic module naming lists of all connected gateways. The dynamic module naming list of each communication gateway in the network 100 holds at least one route to every module in the network.

Referring back to Figure 2, when a module such as module A sends a message to another module, the sending module passes the message to its local communication gateway, in this case 200, with a gateway header prefixed to the message that indicates the destination module for the message. As all communication gateways have a dynamic module naming list listing all modules in the system, the destination module is looked up in its dynamic module naming list to find the most appropriate way to forward the message to the destination module. The dynamic module naming list indicates the route with the least number of gateways to pass through to reach the destination module. The communication gateways will forward the message towards the destination until the destined module receives the message.

With reference to the example of Figure 2, the engine controller A may periodically send measured engine parameters such as the speed of a shaft and the temperature and vibration at various points to the engine monitoring unit module B. The message would be received by communication gateway 200 and its dynamic module naming list 204 would indicate that the shortest route to module B would be via interface 2 and so the message is forwarded from this interface to communication module 300 which would receive the message, determine the destination to be module B and forward the message along link 302 after referring to its own dynamic module naming list (not shown). Engine monitoring unit B may process the raw data received from engine controller A in an appropriate way such as by producing averages, standard deviations etc. The processed data from engine monitoring unit B may periodically be passed to the aircraft monitoring unit C in a similar manner using the dynamic module naming lists of communication gateways 300, 400. Information may be periodically passed to the ground station 601 or requested from the ground station 601 and passed from engine controller A and aircraft monitoring unit C. In these situations the communication gateway for the appropriate module would access its dynamic module naming list and forward the message by the most appropriate route with any communication gateways passed along the route forwarding the message accordingly until the message reaches its destination module.

Use of the dynamic module naming list enables modules to be identified by any convenient name rather than an identification code allowing for modules to be moved without having to know the exact location and the moved modules can de-register and register using their name.

The automatic updating of the dynamic module naming list of each communication gateway provides reliable communication between modules within a network without requiring time consuming manual updating of route lists associated with each module in the network.

Many modifications may be made to the examples described above without departing from the scope of the invention. For example, the invention may be applied to any communication network in which modules are provided such as a network in an office or at a facility such as a factory or hospital or a network for a specific item such as an aircraft, a ship or a piece of machinery such as a turbine. The dynamic module naming list includes a route for each module registered with the network and may include information such as the number of steps to reach a destination module, the particular interface or socket of the communication gateway connected to a particular route and further information for a particular route such as a route with a radio link only to be used when an alternative link with a physical connection is not available to reduce costs associated with use of the more expensive radio link.

## Claims

1. A communication network for communicating between a plurality of modules associated with an aircraft, the communication network comprising:
a plurality of communication gateways (200,300...600), each communication gateway being connectable to at least one other of the communication gateways;
a plurality of modules (A,B...E), wherein each module is a monitoring unit operable to obtain data for a component of the aircraft, wherein each module is connected with or associated with one of the plurality of communication gateways;
wherein each of the communication gateways has a dynamic module naming list providing a route table indicating at least one route from the communication gateway to those of the modules registered in the network, to enable the communication gateway to direct a message to an appropriate recipient module of the plurality of modules on a route having the least number of communication gateways to pass through to reach the recipient module's local communication gateway;
wherein the dynamic module naming list of each of the communication gateways (200,300...600) is updated as to available modules in the network wherein
when a module (A,B...E) is added to the network, it is arranged to register with a communication gateway of the plurality of communication gateways such that the dynamic module naming list for that gateway is updated, and the registration of the added module to that gateway is arranged to be sent to all communication gateways directly connected to that gateway and cascaded to all of the communication gateways in the network for their dynamic module naming lists to be updated; and
when a module (A,B...E) is shutdown, it is arranged to de-register with a communication gateway of the plurality of communication gateways such that the dynamic module naming list for that gateway is updated, and the de-registration of the shut-down module to that gateway is arranged to be sent to all communication gateways directly connected to that gateway and cascaded to all of the communication gateways in the network for their dynamic module naming lists to be updated.

2. A method of communicating in a communication network between a plurality of modules associated with an aircraft, the network comprising:
a plurality of communication gateways (200,300...600), each communication gateway being connectable to at least one other of the communication gateways;
a plurality of modules (A,B...E), wherein each module is a monitoring unit operable to obtain data for a component of the aircraft, wherein each module is connected with or associated with one of the plurality of communication gateways;
wherein each of the communication gateways has a dynamic module naming list providing a route table indicating at least one route from the communication gateway to those of the modules registered in the network, to enable the communication gateway to direct a message to an appropriate recipient module of the plurality of modules on a route having the least number of communication gateways to pass through to reach the recipient module's local communication gateway;
the method comprising:
passing a message from a module of the plurality of modules to its local communication gateway;
determining a route to a destination module from the dynamic module naming list of the local gateway, the route having the least number of communication gateways to pass through to reach the destination modules local communication gateway;
forwarding the message to the next communication gateway or module indicated in the route determined from the dynamic module naming list; and
updating the dynamic module naming list of each of the communication gateways as to available modules in the network
wherein, when a module (A,B...E) is added to the network, it is arranged to register with a communication gateway of the plurality of communication gateways such that the dynamic module naming list for that gateway is updated, and the registration of the added module to that gateway is arranged to be sent to all communication gateways directly connected to that gateway and cascaded to all of the communication gateways in the network for their dynamic module naming lists to be updated; and
when a module (A,B...E) is shutdown, it is arranged to de-register with a communication gateway of the plurality of communication gateways such that the dynamic module naming list for that gateway is updated, and the de-registration of the shut-down module to that gateway is arranged to be sent to all communication gateways directly connected to that gateway and cascaded to all of the communication gateways in the network for their dynamic module naming lists to be updated.

## Patentansprüche

1. Ein Kommunikationsnetzwerk zum Kommunizieren zwischen einer Vielzahl von Modulen, die mit einem Luftfahrzeug verbunden sind, wobei das Kommunikationsnetzwerk umfasst:
eine Vielzahl von Kommunikationsgateways (200, 300... 600), wobei jedes Kommunikationsgateway mit mindestens einem anderen der Kommunikationsgateways verbindbar ist;
eine Vielzahl von Modulen (A, B... E), wobei jedes Modul eine Überwachungseinheit ist, die betreibbar ist, um Daten für eine Komponente des Flugzeugs zu erhalten, wobei jedes Modul mit einem der Vielzahl von Kommunikationsgateways verbunden oder diesem zugeordnet ist;
wobei jedes der Kommunikationsgateways eine dynamische Modulnamensliste aufweist, die eine Routentabelle bereitstellt, die mindestens eine Route von dem Kommunikationsgateway zu den im Netzwerk registrierten Modulen angibt, um dem Kommunikationsgateway zu ermöglichen, eine Nachricht an ein geeignetes Empfängermodul von einer Vielzahl von Modulen auf eine Route zu leiten, welche die geringste Anzahl von Kommunikationsgateways aufweist, die durchlaufen werden müssen, um das lokale Kommunikationsgateway des Empfängermoduls zu erreichen;
wobei die dynamische Modulnamensliste jedes der Kommunikationsgateways (200, 300... 600) hinsichtlich verfügbarer Module in dem Netzwerk aktualisiert wird, wobei wenn ein Modul (A, B... E) dem Netzwerk hinzugefügt wird, es eingerichtet ist, um sich an einem Kommunikationsgateway der Vielzahl von Kommunikationsgateways zu registrieren, sodass die dynamische Modulnamensliste für dieses Gateway aktualisiert wird, und die Registrierung des hinzugefügten Moduls an diesem Gateway an alle Kommunikationsgateways gesendet wird, die direkt mit diesem Gateway verbunden sind, und an alle Kommunikationsgateways im Netzwerk kaskadiert, damit deren dynamische Modulnamenslisten aktualisiert werden; und
wenn ein Modul (A, B... E) ausgeschaltet wird, es eingerichtet ist, um die Registrierung an einem Kommunikationsgateway der Vielzahl von Kommunikationsgateways zu löschen, sodass die dynamische Modulnamensliste für dieses Gateway aktualisiert wird, und die Löschung der Registrierung des ausgeschalteten Moduls an diesem Gateway an alle Kommunikationsgateways gesendet wird, die direkt mit diesem Gateway verbunden sind, und an alle Kommunikationsgateways im Netzwerk kaskadiert, damit deren dynamische Modulnamenslisten aktualisiert werden;

2. Verfahren zum Kommunizieren in einem Kommunikationsnetzwerk zwischen einer Vielzahl von Modulen mit einem zugeordneten Flugzeug, wobei das Netzwerk umfasst:
eine Vielzahl von Kommunikationsgateways (200, 300... 600), wobei jedes Kommunikationsgateway mit mindestens einem der anderen Kommunikationsgateways verbunden werden kann;
eine Vielzahl von Modulen (A, B... E), wobei jedes Modul eine Überwachungseinheit ist, die betreibbar ist, um Daten für eine Komponente des Flugzeugs zu erhalten, wobei jedes Modul mit einem der Vielzahl von Kommunikationsgateways verbunden oder diesem zugeordnet ist;
wobei jedes der Kommunikationsgateways eine dynamische Modulnamensliste aufweist, die eine Routentabelle bereitstellt, die mindestens eine Route von dem Kommunikationsgateway zu den im Netzwerk registrierten Modulen angibt, um dem Kommunikationsgateway zu ermöglichen, eine Nachricht an ein geeignetes Empfängermodul von einer Vielzahl von Modulen auf eine Route zu leiten, welche die geringste Anzahl von Kommunikationsgateways aufweist, die durchlaufen werden müssen, um das lokale Kommunikationsgateway des Empfängermoduls zu erreichen;
das Verfahren ferner Folgendes umfassend:
Weiterleiten einer Nachricht von einem Modul aus mehreren Modulen an sein lokales Kommunikationsgateway;
Bestimmen einer Route zu einem Zielmodul aus der dynamischen Modulnamensliste des lokalen Gateways, wobei die Route die geringste Anzahl von Kommunikationsgateways aufweist, die durchlaufen werden müssen, um das lokale Kommunikationsgateway des Zielmoduls zu erreichen;
Weiterleiten der Nachricht an das nächste Kommunikationsgateway oder -modul, das in der Route angegeben ist, die aus der dynamischen Modulnamensliste bestimmt wurde; und
Aktualisieren der dynamischen Modulnamensliste für jeden der Kommunikationsgateways hinsichtlich verfügbarer Module in dem Netzwerk aktualisiert wird, wobei, wenn ein Modul (A, B... E) dem Netzwerk hinzugefügt wird, es eingerichtet ist, um sich an einem Kommunikationsgateway der Vielzahl von Kommunikationsgateways zu registrieren,
sodass die dynamische Modulnamensliste für dieses Gateway aktualisiert wird, und die Registrierung des hinzugefügten Moduls an diesem Gateway an alle Kommunikationsgateways gesendet wird, die direkt mit diesem Gateway verbunden sind, und an alle Kommunikationsgateways im Netzwerk kaskadiert, damit deren dynamische Modulnamenslisten aktualisiert werden; und
wenn ein Modul (A, B... E) ausgeschaltet wird, es eingerichtet ist, um die Registrierung an einem Kommunikationsgateway der Vielzahl von Kommunikationsgateways zu löschen, sodass die dynamische Modulnamensliste für dieses Gateway aktualisiert wird, und die Löschung der Registrierung des ausgeschalteten Moduls an diesem Gateway an alle Kommunikationsgateways gesendet wird, die direkt mit diesem Gateway verbunden sind, und an alle Kommunikationsgateways im Netzwerk kaskadiert, damit deren dynamische Modulnamenslisten aktualisiert werden.

## Revendications

1. Réseau de communication destiné à communiquer entre une pluralité de modules associés à un aéronef, le réseau de communication comprenant :
une pluralité de passerelles de communication (200, 300...600), chaque passerelle de communication pouvant être connectée à au moins une autre des passerelles de communication ;
une pluralité de modules (A, B...E), chaque module étant une unité de surveillance utilisable pour obtenir des données pour un composant de l'aéronef, chaque module étant connecté à ou associé à une passerelle de la pluralité de passerelles de communication ;
chacune des passerelles de communication ayant une liste de dénomination de modules dynamiques fournissant une table de routage indiquant au moins une route de la passerelle de communication à celles des modules enregistrés dans le réseau, pour permettre à la passerelle de communication de diriger un message vers un module destinataire approprié de la pluralité de modules sur une route ayant le moins de passerelles de communication à traverser pour atteindre la passerelle de communication locale du module destinataire ;
la liste de dénomination des modules dynamiques de chacune des passerelles de communication (200,300...600) étant mise à jour en fonction des modules disponibles dans le réseau
un module (A, B...E) lorsqu'il est ajouté au réseau, étant conçu pour s'enregistrer auprès d'une passerelle de communication de la pluralité de passerelles de communication de telle sorte que la liste de dénomination de modules dynamiques pour cette passerelle est mise à jour, et l'enregistrement du module ajouté à cette passerelle étant conçu pour être envoyé à toutes les passerelles de communication directement connectées à cette passerelle et en cascade à toutes les passerelles de communication du réseau pour que leurs listes de dénomination de modules dynamiques soient mises à jour ; et
un module (A, B...E) lorsqu'il est arrêté, étant conçu pour se désenregistrer auprès d'une passerelle de communication de la pluralité de passerelles de communication de telle sorte que la liste de dénomination de modules dynamiques pour cette passerelle est mise à jour, et le désenregistrement du module d'arrêt à cette passerelle étant conçu pour être envoyé à toutes les passerelles de communication directement connectées à cette passerelle et en cascade à toutes les passerelles de communication du réseau pour que leurs listes de dénomination de modules dynamiques soient mises à jour.

2. Procédé de communication dans un réseau de communication entre une pluralité de modules associés à un aéronef, le réseau comprenant :
une pluralité de passerelles de communication (200, 300...600), chaque passerelle de communication pouvant être connectée à au moins une autre des passerelles de communication ;
une pluralité de modules (A, B...E), chaque module étant une unité de surveillance utilisable pour obtenir des données pour un composant de l'aéronef, chaque module étant connecté à ou associé à une passerelle de la pluralité de passerelles de communication ;
chacune des passerelles de communication ayant une liste de dénomination de modules dynamiques fournissant une table de routage indiquant au moins une route de la passerelle de communication à celles des modules enregistrés dans le réseau, pour permettre à la passerelle de communication de diriger un message vers un module destinataire approprié de la pluralité de modules sur une route ayant le moins de passerelles de communication à traverser pour atteindre la passerelle de communication locale du module destinataire ;
le procédé comprenant en outre :
le passage d'un message d'un module de la pluralité de modules à sa passerelle de communication locale ;
la détermination d'une route vers un module de destination à partir de la liste de dénomination de modules dynamiques de la passerelle locale, la route ayant le moins de passerelles de communication à traverser pour atteindre la passerelle de communication locale du module destinataire ;
la transmission du message à la passerelle ou au module de communication suivant indiqué dans la route déterminée à partir de la liste de dénomination de modules dynamiques ; et
la mise à jour de la liste de dénomination de modules dynamiques de chacune des passerelles de communication en fonction des modules disponibles dans le réseau,
un module (A, B...E) lorsqu'il est ajouté au réseau, étant conçu pour s'enregistrer auprès d'une passerelle de communication d'une pluralité de passerelles de communication de telle sorte que la liste de dénomination de modules dynamiques pour cette passerelle est mise à jour, et l'enregistrement du module ajouté sur cette passerelle étant conçu pour être envoyé à toutes les passerelles de communication directement connectées à cette passerelle et en cascade à toutes les passerelles de communication du réseau pour que leurs listes de dénomination de modules dynamiques soient mises à jour ; et
un module (A, B...E) lorsqu'il est arrêté, étant conçu pour se désenregistrer auprès d'une passerelle de communication de la pluralité de passerelles de communication de telle sorte que la liste de dénomination de modules dynamiques pour cette passerelle est mise à jour, et le désenregistrement du module d'arrêt à cette passerelle étant conçu pour être envoyé à toutes les passerelles de communication directement connectées à cette passerelle et en cascade à toutes les passerelles de communication du réseau pour que leurs listes de dénomination de modules dynamiques soient mises à jour.
